# EUROPÄISCHE PATENTSCHRIFT

(11) **EP 4 574 402 B1**
(45) Veröffentlichungstag und Bekanntmachung des Hinweises auf die Patenterteilung: **04.11.2026**
(21) Anmeldenummer: 23218447.3
(22) Anmeldetag: 20.12.2023
(51) Int. Cl.: B29C 65/14, B29C 65/48, B29C 65/74, B29K 83/00

(54) **VERFAHREN ZUM VERBINDEN VON VERBINDUNGSBEREICHEN AUS SILIKON**
METHODS OF JOINING SILICON BONDING REGIONS
PROCÉDÉS POUR LIER DES ZONES D'INTERCONNEXION EN SILICONE

(43) Veröffentlichungstag der Anmeldung: 25.06.2025
(73) Patentinhaber: Hochschule für Angewandte Wissenschaft und Kunst Hildesheim/Holzminden/Göttingen, 31134 Hildesheim (DE); Sartorius Stedim FMT, 13400 Aubagne (FR)
(72) Erfinder: Ochs, Christian, 37120 Bovenden (DE); Bellmann, Martin, 37215 Witzenhausen (DE); Viöl, Wolfgang, 37139 Adelebsen (DE); Schieche, Bernd, 37075 Göttingen (DE); Wortmeyer, Johannes, 37085 Göttingen (DE); Lausch, Ralf, 37079 Göttingen (DE)
(74) Vertreter: REHBERG HÜPPE + PARTNER

(56) Entgegenhaltungen:
- EP-A1- 3 488 998
- US-A1- 2013 037 207
- US-A1- 2018 161 554

## Beschreibung

### TECHNISCHES GEBIET DER ERFINDUNG

Die Erfindung betrifft ein Verfahren zum Verbinden eines ersten Verbindungsbereichs eines ersten Gegenstands mit einem zweiten Verbindungsbereich eines zweiten Gegenstands oder des ersten Gegenstands, wobei die Verbindungsbereiche aus Silikon bestehen.

Eine Verbindung von Verbindungsbereichen aus Silikon erfolgt beispielsweise bei Gegenständen, insbesondere Produkten, in der Medizintechnik oder in der Bau-, Automobil-, Elektro- oder Elektronikbranche.

Bei "Silikon" handelt es sich um Poly(organo)siloxane, bei denen es sich um eine Gruppe synthetischer Polymere handelt, bei denen Siliciumatome über Sauerstoffatome verknüpft sind. Die Silikone können Molekülketten oder -netze aufweisen. Möglich ist, dass restliche freie Valenzelektronen des Siliciums durch Kohlenwasserstoffreste (insbesondere Methylgruppen) abgesättigt sind. Silikone gehören damit zur Gruppe der siliciumorganischen Verbindungen. Die Silikone können aus einzelnen Siloxaneinheiten bestehen, bei denen die Siliciumatome, die durch das Ausbilden von Bindungen zu Sauerstoff ihr Oktett nicht erreichen, mit organischen Resten abgesättigt sind. Die Silikone umfassen cyclische Polysiloxane, lineare Polysiloxane, verzweigte Polysiloxane, vernetzte Polysiloxane. Silikone können unterschiedliche an das Silicium gebundene Substituenten aufweisen. Das Siloxangerüst kann verschiedene Kohlenwasserstoffe beinhalten, wobei siliciumfunktionelle und organofunktionelle Gruppen vorhanden sein können.

Beispielsweise kann es sich bei dem hier einschlägigen Silikon um Silikonkautschuk oder ein Silikonelastomer handeln. Silikonkautschuke enthalten dabei bspw. Poly(organo)siloxane, die für Vernetzungsreaktionen zusätzliche Gruppen aufweisen, bei denen es sich um Wasserstoffatome, Hydroxygruppen und Vinylgruppen handeln kann, die sich an den Kettenenden befinden können oder auch in die Kette eingebaut sein können. Die Silikonkautschuke können verstärkende Stoffe und Füllstoffe aufweisen, deren Art und Menge das mechanische und chemische Verhalten der durch die Vernetzung entstehenden Silikonelastomere beeinflussen. Die Silikonkautschuke können kaltvernetzt ("RTV-Silikonkautschuke") oder heißvernetzt ("HTV-Silikonkautschuke") sein. Ein anderer Vernetzungsmechanismus von Silikonkautschuken kann in einer beispielsweise durch Edelmetallverbindungen katalysierten Addition von Si-H-Gruppen an siliciumgebundene Vinylgruppen, die in die Polymerketten oder an deren Ende eingebaut sein können, bestehen. Bei RTV-Silikonkautschuken können Ein- und Zweikomponentensysteme verwendet werden.

Des Weiteren kann das Silikon als Silikonharz ausgebildet sein, bei dem es sich um vernetzte Polymethylsiloxane oder Polymethylphenylsiloxane handeln kann. Die Silikonharze können auch mit organischen Harzen, beispielsweise Alkyd-, Epoxid-, Melamin-, Phenol- und Polyesterharzen kombiniert sein. Als Silikonkombinationsharze bezeichnet man auch Copolymerisate aus niedermolekularen, hydroxyfunktionellen Silikonen mit Polyestern, Alkydharzen und Acrylharzen.

Weitere Ausführungsformen von Silikonen sind Fluorsilikone und hochtransparente Silikone.

### STAND DER TECHNIK

Die Veröffentlichung
T. Yamamoto: "Solid-state bonding of silicone elastomer to glass by vacuum oxygen plasma, atmospheric plasma, and vacuum ultraviolet light treatment" Surface and Interface; Analysis 45 (2013) 817-822
untersucht die Möglichkeiten einer Verbindung eines Silikonelastomers mit Glas, wobei hier in dem Verbindungsbereich eine Oberflächenmodifikation des Silikonelastomers mittels Sauerstoffplasma, Atmosphärendruck-Plasma und VUV-Strahlen erfolgt ist. Die VUV-Strahlen haben eine Oberfläche des Silikonelastomers im Verbindungsbereich in der Atmosphäre mit einem Abstand von 3 mm beaufschlagt, wobei eine Beaufschlagung mit 30 mW/cm² bei Raumtemperatur (25 °C) erfolgt ist. Als Silikonelastomere fanden die Materialien Sylpot 184 (Dow Corning Corp.), SIM 240, SIM 260 und X-32-3094-2 (Shin-Etsu Chemical Co., Ltd.) Einsatz. Zur Messung der herbeigeführten Oberflächenmodifikation wurden Kontaktwinkelmessungen bei Anordnung eines Wassertropfens auf der Oberfläche des behandelten Silikonelastomers, Messungen der Veränderungen des Materialverhaltens mit der Zeit und Festigkeitsmessungen der erstellten Verbindung zwischen dem Silikonelastomer und einer Glasplatte durchgeführt. Für die Festigkeitsmessungen wurde ein pilzförmiger Probenkörper aus dem Silikonelastomer verwendet, dessen stielseitige Stirnfläche den Verbindungsbereich mit der Glasplatte ausgebildet hat. Nach der Oberflächenbehandlung dieser Stirnfläche wurde die Stirnfläche innerhalb von zwei Minuten in Kontakt mit der Glasplatte gebracht. Vor der Durchführung der Festigkeitsmessung wurde dieser Kontakt mindestens 24 Stunden aufrechterhalten, um eine Vervollständigung der Verbindungsreaktion zu ermöglichen. Für die Festigkeitsmessungen wurde dann die herbeigeführte Verbindung mit einer Zugkraft beaufschlagt. Untersucht wurde die Abhängigkeit der herbeigeführten Festigkeit der Verbindung von der Behandlungsdauer. Hierbei wurde festgestellt, dass die Festigkeit am höchsten ist, wenn eine Behandlung für die Zeitdauer von wenigen Sekunden bis hin zu ca. 100 Sekunden mit VUV-Strahlen erfolgt.

Die Website
https://www.plastverarbeiter.de/verarbeitungsverfahren/silikone-ohne-klebstoff-fuegen.html
("Silikone ohne Klebstoff fügen"; Datum der Einsichtnahme: 01.08.2022)
schlägt Verfahren für eine klebstofffreie Verbindung von Silikonwerkstoffen miteinander oder mit anderen Werkstoffen wie Aluminium, Glas oder Stahl vor. Eine stoffschlüssige Verbindung der Verbindungsbereiche soll dabei durch Bestrahlen der Oberflächen und anschließendes Fügen erreicht werden, wobei die Biokompatibilität, die Temperaturbeständigkeit und die Chemikalienbeständigkeit sowie die elastischen Eigenschaften des Silikonwerkstoffs erhalten bleiben sollen. Als Anwendungsgebiet von Silikonwerkstoffen werden hier in der Medizintechnik Katheter, Prothesen, Atemmasken, Beatmungsmasken, Ventile in Beatmungsgeräten und jegliche Art von Dichtungen und Schläuchen in medizinischen Geräten genannt. Die Website beschreibt die Problematik, dass ausvulkanisierte Silikone nicht einfach verklebt werden können. Als Grund hierfür wird genannt, dass Silikonelastomere eine chemisch inerte Oberfläche aufweisen mit einer Oberflächenenergie, die auf einem vergleichbaren Niveau zu Teflon (PTFE) liegt. Die niedrige Oberflächenenergie ist ungünstig für eine Benetzung mit Klebstoff. Das Fehlen polarer Gruppen wirkt sich zusätzlich limitierend aus hinsichtlich der erforderlichen Ausbildung reaktiver Wechselwirkungen zwischen Klebstoff und Substrat. Die Website beschreibt, dass aus diesen Gründen zur Gewährleistung einer hinreichenden Adhäsion für Silikone physiologisch und umweltchemisch bedenkliche Haftvermittler verwendet werden. Um eine haftfeste Verbindung mit einer unpolaren Silikongummioberfläche zu erzeugen, werden gemäß dieser Website basische Verbindungen wie aliphatische Amine, Pyridin und Imidazolderivate eingesetzt. Die Website schlägt vor, durch aktivierende Behandlung der Verbindungsbereiche polare funktionelle Gruppen zu erzeugen, die die adhäsiven Eigenschaften verbessern. Verwiesen wird auf ein Forschungsprojekt (IGF-Vorhaben Nr.: 17551 N), bei dem nachgewiesen wurde, dass Silikon dank aktivierender Vorbehandlung ohne chemische Haftvermittler verklebt werden konnte. Die Website schlägt im Gegensatz hierzu ein Verbinden von Silikonen gänzlich ohne Klebstoff vor. Zu diesem Zweck erfolgt eine Bestrahlung eines Verbindungsbereichs mit VUV-Strahlen. Als Strahlungsquelle wird eine Xe-Excimerlampe mit einer emittierten Strahlung mit einer Wellenlänge von 172 nm verwendet. Die Strahlung soll Verbindungsbrüche in dem Verbindungsbereich erzeugen. Durch eine nachgelagerte Reaktion mit Sauerstoff soll dann der Verbindungsbereich reaktiv ausgestattet sein. Bei geeigneter In-Kontakt-Bringung kann es dann unter Ausbildung chemischer Bindungen zum Stoffschluss kommen. Entsprechende Forschungsarbeiten wurden von Fraunhofer IFAM unter der Projektbezeichnung "Lichtmodifizierte Silikonwerkstoffe für Medizin und Technik" durchgeführt. Bei dem Projekt wurde Silikon Elastosil LR3004/40 von Wacker, Burghausen in Form eines 2 mm starken Plattenmaterials verwendet, wobei es sich um Platin-katalysiertes vernetztes Silikon mit einer mittleren Härte von 40 Shore A gehandelt hat. Als anorganischer Fügepartner wurde plattiertes Aluminium 2024, Stahlprüfkörper aus Kaltband DC01 mit glatter, riss- und porenfreier Oberfläche und Glasprüfkörper aus Borofloat von Rocholl, Eschelbronn eingesetzt. Nach der VUV-Bestrahlung der Verbindungsbereiche der Silikonplatte und des anorganischen Fügepartners wurden diese miteinander in Kontakt gebracht und für eine vorgegebene Zeit mit Druck und unter Erwärmung durch eine Heizpresse mit einer erhöhten Temperatur beaufschlagt. Anschließend wurde eine Untersuchung der Festigkeit der herbeigeführten Verbindung unter Verwendung eines Schältests in Anlehnung an DIN EN ISO 11339 durchgeführt und es ist eine Untersuchung der Rauigkeit der Fügeteile mittels Konfokalmikroskopie erfolgt. Im Rahmen des Projekts ist eine Variation der Leistung der VUV-Strahlen erfolgt, wobei die Bestrahlung unter Luftatmosphäre und Atmosphärendruck erfolgt ist. Es hat sich gezeigt, dass die Festigkeit der erzeugten Verbindung unabhängig von einer Aussetzung der Verbindung über acht Wochen mit Wasser und einer erhöhten Temperatur von 180 °C unverändert ist. Eine Anpressung der Verbindungsbereiche aneinander ist bei Temperaturen zwischen 100 °C und 200 °C erfolgt, wobei Drücke zwischen 0,2 und 1,8 MPa appliziert worden sind und die Anpressdauer zwischen 5 und 15 Minuten betragen hat. Da die Verbindung unter

Einsatz einer Heißpresse herbeigeführt worden ist, eignet sich das in dem Projekt eingesetzte Verfahren nicht für eine Verbindung von dreidimensionalen Gegenständen. Die Verbindung dreidimensionaler Gegenstände soll gemäß dieser Website vielmehr Gegenstand zukünftiger Forschungsbemühungen sein.

Die Website
https://www.ifam.fraunhofer.de/de/technologien/vuv-strahlung-optimiert-silikoneigenschaften-an-der-oberflaeche.html
("VUV-Strahlung optimiert Silikoneigenschaften an der Oberfläche"; Datum der Einsichtnahme: 01.08.2022)
beschreibt, dass Silikone, die in der Medizin- oder Lebensmitteltechnik Einsatz finden können, verschleißanfällig und schmutzanziehend sind und sich nur bedingt kleben lassen. Ein hoher Reibungskoeffizient eines Silikonelastomers, der für eine starke Verschleißanfälligkeit verantwortlich ist und eine Montage beispielsweise von Silikon-O-Ringen erschwert, kann um bis zu 90 % durch Bestrahlung der Oberfläche mit UV-Strahlen reduziert werden, ohne dass die ansonsten positiven mechanischen Eigenschaften der Silikone verschlechtert werden. Darüber hinaus führt die Bestrahlung der Oberfläche mit kurzwelliger UV-Strahlung zur Glättung der Oberfläche und Härtung derselben, was wiederum zu einer reduzierten Staub- und Schmutzpartikelanhaftung führt. Die Website erwähnt auch eine Aktivierung von Verbindungsbereichen von Silikonen mittels VUV-Strahlen, so dass ein Verkleben mit Epoxidharzen, Polyurethan-Klebstoffen oder Klebebändern erfolgen kann, wobei dann auch auf chemische Haftvermittler verzichtet werden kann. Alternativ schlägt die Website vor, VUV-aktivierte Silikonoberflächen ohne Klebstoff stoffschlüssig miteinander zu verbinden. Eine derartige Verbindung wird im sogenannten Bond-Verfahren für Silikonfügeteile im homogenen Verbund oder im heterogenen Verbund mit Glas, Aluminium oder Stahl vorgeschlagen. Die dabei erzeugten Verbindungen sollen alterungs- und hydrolysestabil sein. Hingewiesen wird auf die IGF-Vorhaben 17551 N, 18704 N und 19773 N, die die Modifizierung von Silikon mittels UV-Licht betreffen.

Die Website
https://www.sartorius.com/en/products/fluid-management/asepticdisconnectors/biosealer-tube-sealer
("Biosealer® TC Aseptic Tube Sealing Device"; Datum der Einsichtnahme: 01.08.2022)
beschäftigt sich mit sterilen fluidischen Trennungen thermoplastischer Schläuche in bio-pharmazeutischen Herstellprozessen. Vorgeschlagen wird ein Handschweißgerät, in welches ein mit einem Fluid gefüllter Schlauch eingelegt wird. Der Schlauch wird zwischen zwei Backen derart zusammengepresst, dass das Fluid in dem Schlauch zwischen den Backen verdrängt wird und der Schlauch zwischen den Backen abgeflacht wird, so dass die gegenüberliegenden Innenflächenbereiche des Schlauches aneinander zur Anlage kommen. Durch Applikation von Wärme erfolgt dann ein Verschweißen der Abplattungen des Schlauches miteinander. Nach dem Abkühlen kann dann ein Durchtrennen des Schlauches im Bereich der Abplattung erfolgen. Auf diese Weise kann eine fluidisch dichte und sterile endseitige Verschließung der beiden infolge der Durchtrennung entstehenden Schlauchstücke erzeugt werden.

Die Druckschrift US 2018/0161554 A1 betrifft eine Verbindung zwischen einem äußerem Kunstharzrohr mit einem sich hierdurch erstreckenden inneren Kunstharzrohr. Die Kunstharzschläuche können auch Silikonharz oder Fluor-enthaltenen Silikonharz aufweisen. Die miteinander verbundenen Rohre finden Einsatz für die Herstellung eines Ballonkatheters für medizinische Anwendungen. Als Problem wird für derartige Verbindungen von Kunstharzrohren in US 2018/0161554 A1 beschrieben, dass eine Verbindung lediglich bei sich entsprechenden Kunstharzmaterialien der beiden Rohre möglich sein soll. Bei Einsatz eines Klebstoffes für die Verbindung kann es zu einer unerwünschten Aushärtung der Kunstharzmaterialien kommen, womit die Flexibilität der aus den beiden Rohren bestehenden Baugruppe reduziert ist. Vorgeschlagen wird in US 2018/0161554 A1, dass eine Oberflächenaktivierung der Kunstharzrohre erfolgt, indem eine Bestrahlung einer Oberfläche mit UV-Strahlen erfolgt. Vorgeschlagen wird auch eine Plasmabehandlung des Verbindungsbereichs. Vor der Aktivierung der Oberfläche werden die Endbereiche des äußeren Kunstharzrohres zu einem Wulst umgefaltet. In diesem Zustand wird die Montagebaugruppe, die aus dem inneren Kunstharzrohr und dem äußeren Kunstharzrohr mit dem umgefalteten Wülsten gebildet ist, in Rotation versetzt, wobei die Wülste dann mit UV-Strahlen bestrahlt werden. Die UV-Strahlen werden mittels einer Strahlungsquelle erzeugt und verfügen über eine Wellenlänge von 200 nm oder weniger. Einsatz kann eine Excimer-Strahlungsquelle mit einer Wellenlänge von 172 nm, eine Niederdruck-Mercury-Strahlungsquelle mit einer Wellenlänge von 185 nm oder eine Deuterium-Strahlungsquelle mit einer Wellenlänge im Bereich von 120 nm bis 200 nm, wobei die Leistung 10 bis 20 mV/cm² betragen kann, finden. Nach der Bestrahlung findet dann die Plasmabehandlung statt. Anschließend werden die umgefalteten Endbereiche des äußeren Kunstharzrohres wieder zurückgefaltet, sodass das äußere Kunstharzrohr wieder seine ursprüngliche hohlzylindrische Form einnimmt. Dies hat zur Folge, dass die zurück gefalteten aktivierten äußeren Oberflächen des Wulstes innen zur Anlage kommen an die Mantelfläche des inneren Kunstharzrohres, wobei auch eine Anpresskraft in Bereich von 0,1 bis 1,0 MPA erzeugt werden kann. Zusätzlich kann eine Erwärmung der Verbindungsbereiche erfolgen, wobei Temperaturen im Bereich von 100°C bis 200°C zum Einsatz kommen können. Alternativ wird in US 2018/0161554 A1 vorgeschlagen, dass die verbindenden Endbereiche des äußeren Kunstharzrohres zunächst konisch aufgeweitet werden, aktiviert werden und dann unter radialer Komprimierung an die Außenfläche des inneren Kunstharzrohres angepresst werden. Möglich ist auch eine radiale Aufweitung des inneren Kunstharzrohres zur Herbeiführung der Anpressung der Verbindungsbereiche. Vorgeschlagen wird des Weiteren die Aktivierung der Oberflächen für die Verbindung mittels einer Elektrode in einer elektrischen Leitungskammer, in welcher ein Gas angeordnet ist, welches eine elektrische Entladung ermöglicht.

US 2013/0037207 A1 offenbart eine Verbindung eines klotzartigen Gehäuses mit einer Abdeckung. In dem Gehäuse sind feine fluidische Kanäle ausgebildet, die durch die Abdeckung geschlossen sind. Die derart gebildete mikrofluidische Einrichtung findet Einsatz für ein Drogen- oder Arzneimittel-Screening und eine DNA-Diagnostik. Das Gehäuse und die Abdeckung sind aus Silikonharz hergestellt. Die Oberfläche des Gehäuses, auf welche die Abdeckung aufzubringen ist, wird mit dem VUV-Strahlen aktiviert, die eine Energie von 200 mJ/cm² bis 1500 mJ/cm² und eine Wellenlänge von 172 nm aufweisen können. Die Abdeckung wird dann unter Druck gegen die aktivierte Oberfläche des Gehäuses gepresst, womit sich Siloxan-Bindungen ergeben sollen. Zusätzlich kann die Oberfläche des Gehäuses durch ein atmosphärisches Plasma aktiviert werden. Die Oberfläche des Gehäuses kann auch Vorsprünge mit einer Höhe von mehreren Nanometern bis hin zu mehreren hundert Nanometern aufweisen, die als Elektroden für Messungen verwendet werden können. Das Gehäuse kann aus einem Material hergestellt sein, welches für VUV-Strahlen durchlässig ist. Die Abdeckung besteht aus einem Substrat, auf welches Silikonharz aufgetropft wird zur Bildung einer Verbindungsschicht, mit welcher die Abdeckung auf das Gehäuse aufgepresst werden kann. Diese Schicht verfügt über eine Schichtdicke von maximal 10 µm. Zu diesem Zeitpunkt soll die Kunstharzschicht noch keine adhäsive Wirkung entfalten. Um eine Art Schmierung zwischen dem Gehäuse und der Abdeckung zu gewährleisten, kann auch Methanol auf die Kontaktfläche der Kunstharzschicht aufgebracht werden. Hieran anschließend erfolgt eine Beaufschlagung des Verbindungsbereichs mit VUV-Strahlen durch das diesbezüglich durchlässige Gehäuse. Durch eine Ausbildung eines Oxid-Films im Bereich der Kontaktfläche erfolgt eine Verbindung der Abdeckung mit dem Gehäuse.

EP 3 488 998 A1 offenbart eine Herstellung eines Mikrochips für einen Mikroreaktor für die Biochemie. Der Mikrochip verfügt über ein Substrat mit feinen Kanälen und kann aus Silikon oder Silikonharz hergestellt sein. Der Mikrochip besteht aus zwei miteinander verbundenen Substraten, die plattenförmig ausgebildet sind mit einer Größe von bspw. 85 mm x 128 mm und einer Dicke von 1 mm bis 3 mm. In einem Aktivierungsschritt werden die Oberflächen der Substrate mit VUV-Strahlen und einem atmosphärischen Plasma beaufschlagt. Hierbei werden VUV-Strahlen mit einer Wellenlänge von maximal 200 nm, vorzugsweise 172 nm, verwendet, wobei die Strahlung im Bereich von 10 bis 100 mV/cm² betragen kann und eine Aussetzung der Substrate mit den VUV-Strahlen für eine Zeitspanne von 10 bis 60 Sekunden erfolgen kann. Hieran anschließend werden die Substrate so aufeinander gestapelt, dass die aktivierten Oberflächen aneinander zur Anlage kommen. Infolge vom im Längsschnitt beispielsweise wellenförmigen Unebenheiten ergeben sich Zwischenräume zwischen den Substraten. Hierbei erfolgt eine Anpressung der Substrate mit einer Anpresskraft im Bereich von 0.1 MPa bis 5 MPa, beispielsweise für 60 bis 300 Sekunden. Um die Zwischenräume zu beseitigen, erfolgt zusätzlich eine Erwärmung der Substrate, die zur Anpassung der Oberflächen und damit zu einer vollflächigen Anlage führt. Die Substrate können miteinander verbunden werden durch ausgelöste chemische Reaktionsprozesse, insbesondere eine Hydrogen-Bindung zwischen OH-Gruppen der Substrate oder kovalente Bindungen infolge einer Dehydrations-Kondensation.

### AUFGABE DER ERFINDUNG

Der Erfindung liegt die Aufgabe zugrunde, ein neues Verfahren zum Verbinden von Verbindungsbereichen aus Silikon vorzuschlagen, wobei vorzugsweise eine Anwendung des Verfahrens für eine Verbindung von spezifischen Verbindungsbereichen mindestens eines Gegenstands erfolgt.

### LÖSUNG

Die Aufgabe der Erfindung wird erfindungsgemäß mit den Merkmalen des unabhängigen Patentanspruchs gelöst. Weitere bevorzugte erfindungsgemäße Ausgestaltungen sind den abhängigen Patentansprüchen zu entnehmen.

### BESCHREIBUNG DER ERFINDUNG

Die Erfindung schlägt Verfahren zum Verbinden eines ersten Verbindungsbereichs mit einem zweiten Verbindungsbereich gemäß den Ansprüchen 1, 7, 10 und 11 vor. Hierbei können die beiden Verbindungsbereiche unterschiedlichen Gegenständen zugeordnet sein oder demselben Gegenstand. Die Verbindungsbereiche bestehen dabei aus Silikon.

Erfindungsgemäß wird vorgeschlagen, dass der erste und/oder der zweite Verbindungsbereich mit VUV-Strahlen beaufschlagt werden/wird. Hierbei bezeichnen VUV-Strahlen vakuumultraviolette Strahlen mit einem Spektralbereich elektromagnetischer Strahlung. Der Spektralbereich der VUV-Strahlen liegt vorzugsweise im Bereich von 0,2 nm bis 200 nm oder 10 nm bis 200 nm oder im Bereich von 100 nm bis 200 nm, wobei die Wellenlänge insbesondere zwischen den Spektralbereichen des sichtbaren Lichts und der Röntgenstrahlung liegt. Vorzugsweise verfügen die VUV-Strahlen über eine Photonenenergie von mindestens 5 eV, vorzugsweise im Bereich von 6 eV bis 6000 eV, und/oder die VUV-Strahlen sind hochenergetische, ionisierende Strahlen.

Vorzugsweise erfolgt erfindungsgemäß eine klebstofffreie Verbindung und kein Einsatz eines Haftvermittlers. Des Weiteren beruht die Erfindung auf der Erkenntnis, dass bei einer Verbindung der Verbindungsbereiche über Klemmen oder anderweitige mechanische Verbindungen wie Schellen ein Quetschen des Materials erfolgt, welches zu mechanischen Materialschädigungen führen kann, die unerwünscht sind und beispielsweise zu Undichtigkeiten oder einem Materialversagen führen können. Möglich ist im Rahmen der Erfindung auch, dass eine fluiddichte Verbindung der Verbindungsbereiche geschaffen wird.

Vorzugsweise wird im Rahmen der Erfindung die Anpressung der Verbindungsbereiche aneinander für weniger als eine Stunde (beispielsweise 1 Minute bis 50 Minuten oder 5 Minuten bis 40 Minuten), mindestens eine Stunde, mindestens fünf Stunden, mindestens zehn Stunden, mindestens 15 Stunden oder sogar mindestens 24 Stunden aufrechterhalten. Möglich ist, dass eine Durchführung des Verfahrens und insbesondere die Beaufschlagung mit den VUV-Strahlen und/oder die Anpressung der Verbindungsbereiche aneinander unter Normbedingungen durchgeführt wird, was die Möglichkeit umfasst, dass das Verfahren bei 20 °C und 65 % Luftfeuchtigkeit durchgeführt wird.

Beispielsweise kann die Herstellung der Verbindung zwischen den Verbindungsbereichen durch Quervernetzungsprozesse in dem Silikon erfolgen.

Die Parameter des Verfahrens, insbesondere der Abstand einer VUV-Strahlungsquelle von einem Verbindungsbereich, eine Leistung der VUV-Strahlungsquelle, die Wellenlänge der VUV-Strahlen und die Anpresskraft bzw. Flächenpressung der Anpressung der Verbindungsbereiche aneinander können spezifisch von der Art der zu verbindenden Gegenstände und/oder den Materialien der Verbindungsbereiche (insbesondere der chemischen Zusammensetzung und/oder der Struktur) abhängig gewählt werden.

Möglich ist im Rahmen der Erfindung, dass die Verbindungsbereiche aneinander angepresst werden, nachdem der erste und/oder der zweite Verbindungsbereich mit VUV-Strahlen beaufschlagt worden sind/ist. Für diese Ausgestaltung erfolgt zunächst die Vorbereitung der Verbindungsbereiche durch Beaufschlagung mit VUV-Strahlen, während dann anschließend der Kontakt zwischen den Verbindungsbereichen herbeigeführt wird, womit dann die Verbindung hergestellt wird.

Für einen anderen Vorschlag der Erfindung werden die Verbindungsbereiche allerdings aneinander angepresst, während diese mit VUV-Strahlen beaufschlagt werden. Auf diese Weise kann eine Verkürzung des Verfahrens zum Verbinden erfolgen. Andererseits kann es sich als vorteilhaft erweisen, wenn eine Behandlung der Verbindungsbereiche mit den VUV-Strahlen erfolgt, während diese aneinander angepresst werden.

Für einen Vorschlag des erfindungsgemäßen Verfahrens erfolgt die Beaufschlagung des ersten und/oder zweiten Verbindungsbereichs frei von Sauerstoff. Möglich ist beispielsweise, dass die Beaufschlagung in einem (technischen) Vakuum erfolgt. Möglich ist aber auch, dass die Beaufschlagung des ersten und/oder zweiten Verbindungsbereichs in einer Kammer erfolgt, die mit einem inerten Fluid gefüllt ist. Bei dem inerten Fluid kann es sich beispielsweise um Stickstoff handeln.

Erfindungsgemäß erfolgt im Zusammenhang mit der Beaufschlagung mindestens eines Verbindungsbereichs mit VUV-Strahlen und/oder dem Anpressen der Verbindungsbereiche aneinander eine elastische und/oder plastische Verformung mindestens eines Gegenstands in dem mindestens einen Verbindungsbereich. Hierbei kann die Verformung vor, während oder nach der Beaufschlagung mit VUV-Strahlen und/oder vor, während und/oder nach dem Anpressen der Verbindungsbereiche aneinander erfolgen.

Mittels der elastischen und/oder plastischen Verformung mindestens eines Gegenstands in dem Verbindungsbereich können unterschiedliche, die Erfindung nicht beschränkende Effekte herbeigeführt werden:
a) Die elastische und/oder plastische Verformung kann zu einer Veränderung der Geometrie der Kontaktfläche des Verbindungsbereichs führen.
   - Möglich ist, dass diese Veränderung der Geometrie eine vergrößerte Kontaktfläche gewährleistet.
   - Möglich ist auch, dass die Veränderung der Geometrie in einer Verringerung der Dicke besteht. Diese Veränderung der Dicke kann zu einer Verbindung führen, deren Erstreckung quer zu der Kontaktfläche der Verbindungsbereiche reduziert ist. Die Verringerung der Dicke kann aber auch vorteilhaft verwendet werden, um eine besonders effektive Einbringung der VUV-Strahlen, u. U. durch das Material im Verbindungsbereich in Dickenrichtung, erfolgen kann.
   - Auch möglich ist, dass die elastische und/oder plastische Verformung zu einer strukturellen Veränderung des Materials führen kann, die zur Folge hat, dass mittels der VUV-Strahlen der adhäsive Effekt der Verbindungsbereiche besonders effektiv aktiviert werden kann und/oder die Verbindung mit der Anpressung besonders gut erfolgen kann.
b) Möglich ist auch, dass bei einer elastischen und/oder plastischen Verformung diese Verformung auch nach der Herstellung der Verbindung verbleibt. So kann beispielsweise eine verbleibende elastische Verformung zu einer Verspannung der Gegenstände relativ zueinander in den Verbindungsbereichen führen, welche die hergestellte Verbindung positiv beeinflussen kann.

Für eine Lösung der der Erfindung zugrunde liegenden Aufgabe wird die elastische und/oder plastische Verformung mittels eines Krafteinleitungskörpers herbeigeführt. In diesem Fall weist der Krafteinleitungskörper einen Materialbereich auf, der für die VUV-Strahlen zumindest teildurchlässig oder durchlässig ist, oder der gesamte Krafteinleitungskörper besteht aus einem teildurchlässigen oder durchlässigen Materialbereich. Beispielsweise kann ein derartiger Krafteinleitungskörper oder Materialbereich aus Quarzglas oder Magnesiumfluorid hergestellt sein. In diesem Fall wird der Krafteinleitungskörper derart zwischen dem Gegenstand mit dem Verbindungsbereich und der Strahlungsquelle angeordnet, dass der Verbindungsbereich von einer VUV-Strahlungsquelle mit den VUV-Strahlen durch den Materialbereich des Krafteinleitungskörpers beaufschlagt wird. Möglich ist beispielsweise, dass der Krafteinleitungskörper als Platte oder Quader oder anderweitiger Anpresskörper ausgebildet ist, welcher eine Normalspannung auf den den Verbindungsbereich ausbildenden Gegenstand ausübt. Beispielsweise kann eine Quarzglasplatte Einsatz finden, deren Dicke weniger als 3 mm beträgt, mehr als 7 mm beträgt oder im Bereich von 3 bis 7 mm, vorzugsweise 4 bis 6 mm, liegt. Der derart ausgebildete Krafteinleitungskörper ermöglicht einerseits die Applikation der Kraft auf den Gegenstand zur elastischen und/oder plastischen Verformung und gewährleistet gleichzeitig die Durchleitung der VUV-Strahlen, um die gewünschte Modifikation des Verbindungsbereichs herbeizuführen.

Grundsätzlich können die Verbindungsbereiche von einem einzigen beliebigen Gegenstand oder von zwei beliebigen Gegenständen ausgebildet sein, wobei der eine Gegenstand oder die beiden Gegenstände dann lediglich in dem Verbindungsbereich aus Silikon bestehen kann/können oder vollständig aus Silikon bestehen kann/können.

Für einen Vorschlag der Erfindung findet das Verfahren Anwendung auf einen einen Verbindungsbereich ausbildenden Gegenstand, welcher ein Hohlkörper mit einem Innenraum ist, der vorzugsweise eine Öffnung nach außen aufweist. In diesem Fall kann eine Beaufschlagung des Verbindungsbereichs dieses Gegenstands durch den Innenraum erfolgen, was alternativ oder kumulativ zu einer Beaufschlagung des Gegenstands von außen der Fall sein kann. Möglich ist somit, dass die VUV-Strahlungsquelle so angebracht und orientiert ist, dass die VUV-Strahlen über die Öffnung des Innenraums in den Innenraum gelangen und hier eine den Innenraum begrenzende Innenfläche beaufschlagen, wobei diese Innenfläche vorzugsweise den Verbindungsbereich bildet. Alternativ möglich ist aber, dass die VUV-Strahlen dann von dieser Innenfläche nach außen durch den Gegenstand an einen außenliegenden Verbindungsbereich übertragen werden.

Für eine andere Anwendung des erfindungsgemäßen Verfahrens stellt ein einziger Silikonschlauch den ersten Verbindungsbereich und den zweiten Verbindungsbereich bereit, wobei diese dann von diametral gegenüberliegenden Innenflächenbereichen bereitgestellt werden, die sich jeweils in Umfangsrichtung um ca. 180° erstrecken und unmittelbar aneinander anschließen. Während der Beaufschlagung mindestens eines der Verbindungsbereiche mit VUV-Strahlen wird dann eine elastische und/oder plastische Verformung mittels eines Krafteinleitungskörpers derart herbeigeführt, dass die Innenflächenbereiche abgeplattet werden und aneinander zur Anlage gebracht werden. Darüber hinaus kann der Krafteinleitungskörper auch eine Anpressung der Innenflächenbereiche aneinander und unter Umständen auch eine hierdurch bedingte weitere elastische und/oder plastische Verformung, insbesondere eine Dickenänderung, herbeiführen. In diesem Fall weist der Krafteinleitungskörper einen für die VUV-Strahlen zumindest teildurchlässigen Materialbereich, insbesondere aus Quarzglas oder Magnesiumfluorid, auf und die mit den VUV-Strahlen zu beaufschlagenden Verbindungsbereiche werden von einer VUV-Strahlungsquelle durch den Materialbereich des Krafteinleitungskörpers mit den VUV-Strahlen beaufschlagt. Ein derartiges Verfahren kann sogar dann durchgeführt werden, wenn der Silikonschlauch mit einem Fluid gefüllt ist. Durch die Verbindung der gegenüberliegenden Innenflächenbereiche miteinander kann eine fluiddichte Verschließung des Silikonschlauches in dem Bereich der geschaffenen Verbindung erfolgen.

Vorzugsweise erfolgt anschließend eine Durchtrennung des Silikonschlauches im Bereich der Verbindungsbereiche, womit aus dem Silikonschlauch zwei endseitig fluiddicht verschlossene Silikonschlauchstücke geschaffen werden.

Für eine weitere Lösung der der Erfindung zugrunde liegenden Aufgabe erfolgt keine unmittelbare Verbindung der beiden Verbindungsbereiche nach deren Behandlung mit den VUV-Strahlen miteinander. Vielmehr bilden die Verbindungsbereiche (insbesondere für den Fall, dass diese von gegenüberliegenden Innenflächenbereichen eines Silikonschlauches gebildet sind) einen Zwischenraum. In diesen Zwischenraum kann dann ein Klebstoff, ein beliebiges Verbindungsmittel (bspw. in Form eines aushärtenden Verbindungsfluides oder pastösen Mediums) oder ein Verbindungskörper eingebracht werden, der dann die Verbindung mit den mittels der VUV-Strahlen behandelten Verbindungsbereichen eingeht.

Für die Ausgestaltung des Gegenstandes als Silikonschlauch kann zunächst eine elastische und/oder plastische Verformung des Silikonschlauches mittels eines Krafteinleitungskörpers derart erfolgen, dass eine Abplattung des Silikonschlauches erfolgt, im Bereich welcher die Innenflächenbereiche des Silikonschlauches aneinander zur Anlage kommen. In einem folgenden Verfahrensschritt kann dann mittels eines Trennwerkzeugs eine Trennstelle erzeugt werden, die Silikonschlauchstückteile voneinander trennt. Hieran anschließend wird ein Krafteinleitungskörperteil von Endbereichen der Silikonschlauchstückteile weg bewegt. In diesen Endbereichen können dann die Zwischenräume gebildet werden, was insbesondere durch die elastische Rückstellung der Wandungen der Silikonschlauchstückteile in den Endbereichen erfolgen kann oder durch zusätzliche Maßnahmen. Die Innenflächenbereiche werden dann im Bereich der Zwischenräume, die an die Trennstelle angrenzen, mittels einer Strahlungsquelle mit VUV-Strahlen beaufschlagt. Hieran anschließend kann dann ein Klebstoff, ein Verbindungsmittel oder ein Verbindungskörper in die Zwischenräume eingebracht werden, der dann eine Verbindung mit den Innenflächenbereichen eingeht.

Möglich ist, dass die erläuterten Verfahren zur Versiegelung eines mit einem Fluid gefüllten Produktes, beispielsweise eines Aufnahmebehälters für ein steriles Produkt, verwendet werden.

Gemäß einer weiteren Lösung der der Erfindung zugrunde liegenden Aufgabe ist ein erster Gegenstand, welcher den ersten Verbindungsbereich ausbildet, ein erster Silikonschlauch, während ein zweiter Gegenstand, welcher den zweiten Verbindungsbereich ausbildet, ein zweiter Silikonschlauch ist. In diesem Fall sind die Verbindungsbereiche die jeweiligen Stirnflächen der Silikonschläuche. Somit werden für diese Ausgestaltung der Erfindung zunächst die Stirnflächen der Silikonschläuche mit den VUV-Strahlen beaufschlagt. Die beiden Stirnflächen werden dann aneinander angepresst, so dass aus den beiden Silikonschläuchen ein fluiddichter Silikonschlauchstrang geschaffen werden kann. Zu diesem Zweck verfügen vorzugsweise die beiden Silikonschläuche über gleiche Innen- und/oder Außendurchmesser oder zumindest einen überlappenden Durchmesserbereich.

Für eine weitere Lösung der der Erfindung zugrunde liegenden Aufgabe ist ein erster Gegenstand, welcher den ersten Verbindungsbereich ausbildet, ein Silikonschlauch. In diesem Fall ist der erste Verbindungsbereich eine endseitige Innenfläche des Silikonschlauches. Ein zweiter Gegenstand, welcher den zweiten Verbindungsbereich ausbildet, weist einen fluidischen Anschlussstutzen auf. Der fluidische Anschlussstutzen weist eine Mantelfläche aus Silikon auf, wobei der Anschlussstutzen vollständig aus Silikon bestehen kann oder auf den Anschlussstutzen eine Schicht oder Hülse aus Silikon, die dann die Mantelfläche ausbildet, aufgebracht sein kann. In diesem Fall bildet die Mantelfläche den zweiten Verbindungsbereich. Nach dem Beaufschlagen des ersten und/oder zweiten Verbindungsbereichs mit VUV-Strahlen wird der Silikonschlauch über den Anschlussstutzen gestülpt, womit die Verbindungsbereiche miteinander in Kontakt kommen und die adhäsive Verbindung und/oder Vernetzung in den Verbindungsbereichen erfolgt.

Möglich ist, dass über Klemmbacken oder eine temporäre Klemmschelle oder einen Anpresskörper der Silikonschlauch nach innen gegen den Anschlussstutzen gepresst wird. Für einen Vorschlag der Erfindung hat der Anschlussstutzen ein Übermaß gegenüber dem Silikonschlauch, so dass bei dem Überstülpen eine elastische Aufweitung des Silikonschlauches und/oder radiale Komprimierung des Anschlussstutzens erfolgen muss, die dann die Anpresskraft der Verbindungsbereiche aneinander gewährleistet. Über das Ausmaß des Übermaßes kann dann eine Vorgabe der Anpresskraft erfolgen.

Für diese Ausgestaltung kann eine Beaufschlagung der Innenfläche des Silikonschlauches mit VUV-Strahlen durch den Innenraum des Silikonschlauches erfolgen.

Im Rahmen der Erfindung können VUV-Strahlen mit einer beliebigen Wellenlänge oder auch mit einer Überlagerung unterschiedlicher Wellenlängen Einsatz finden. Für einen besonderen Vorschlag weisen die VUV-Strahlen eine Wellenlänge von etwa 172 nm oder 185 nm auf, wobei hiervon auch umfasst sein soll, dass die Wellenlänge um ± 10 % oder ± 5 % oder ± 2 % von den vorgenannten Wellenlängen abweichen kann.

Vorteilhafte Weiterbildungen der Erfindung ergeben sich aus den Patentansprüchen, der Beschreibung und den Zeichnungen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Hinsichtlich des Offenbarungsgehalts - nicht des Schutzbereichs - der ursprünglichen Anmeldungsunterlagen und des Patents gilt Folgendes: Weitere Merkmale sind den Zeichnungen - insbesondere den dargestellten Geometrien und den relativen Abmessungen mehrerer Gegenstände zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen Patentansprüche des erteilten Patents gilt.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Die in den Patentansprüchen angeführten Merkmale können durch weitere Merkmale ergänzt werden oder die einzigen Merkmale sein, die der Gegenstand des jeweiligen Patentanspruchs aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1-3**: zeigen Verfahrensschritte eines Verfahrens zum Verbinden von zwei Gegenständen, bei denen es sich jeweils um einen Silikonschlauch handelt.
- **Fig. 4-6**: zeigen Verfahrensschritte eines Verfahrens zur Verbindung eines Gegenstands mit einem Anschlussstutzen mit einem Silikonschlauch.
- **Fig. 7-10**: zeigen Verfahrensschritte eines Verfahrens, mit dem aus einem Silikonschlauch, der mit einem Fluid gefüllt sein kann, zwei Silikonschlauchstücke hergestellt werden, die im Bereich einer Trennstelle fluiddicht verschlossen sind.
- **Fig. 11-15**: zeigen Verfahrensschritte eines weiteren Verfahrens, mit dem aus einem Silikonschlauch, der mit einem Fluid gefüllt sein kann, zwei Silikonschlauchstücke hergestellt werden, die im Bereich einer Trennstelle fluiddicht verschlossen sind.

### FIGURENBESCHREIBUNG

In den folgenden Figuren wird teilweise für Gegenstände oder Merkmale, die sich hinsichtlich ihrer Gestaltung und/oder Funktion entsprechen, dasselbe Bezugszeichen verwendet, wobei dann die Gegenstände oder Merkmale durch einen zusätzlichen Buchstaben a, b voneinander unterschieden sein können. Auf diese Gegenstände oder Merkmale kann dann ohne Verwendung des zusätzlichen Buchstabens Bezug genommen werden, womit dann ein Gegenstand oder ein Merkmal, mehrere Gegenstände oder Merkmale oder sämtliche Gegenstände oder Merkmale mit der Bezugszahl gemeint sein können.

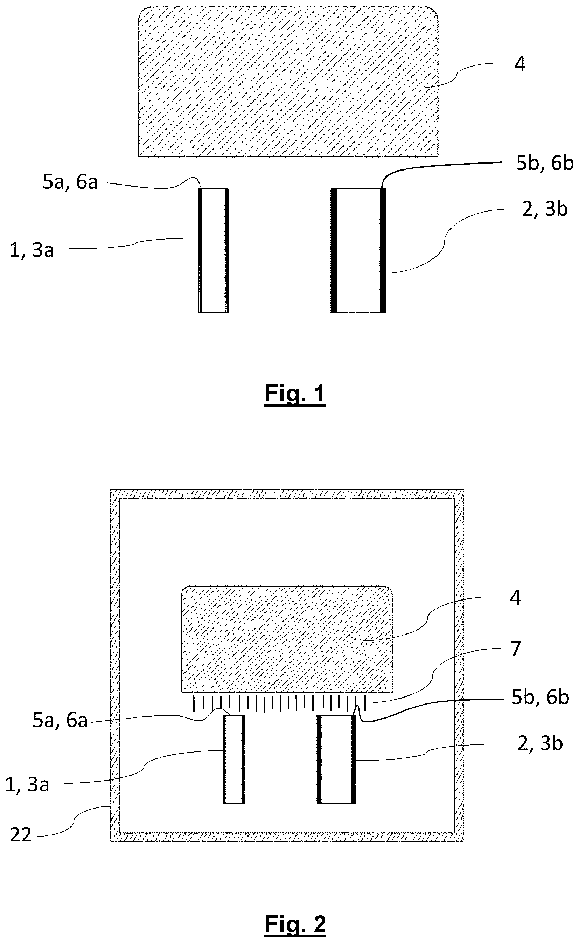

**Fig. 1** zeigt einen ersten Gegenstand 1 und einen zweiten Gegenstand 2, die jeweils als Silikonschläuche 3a, 3b ausgebildet sind. Hierbei zeigt Fig. 1 lediglich schematisch die zu verbindenden Endbereiche der Silikonschläuche 3. Die Silikonschläuche 3 verfügen vorzugsweise über dieselben Innen- und Außendurchmesser, wobei diese aus denselben oder unterschiedlichen Silikonmaterialien hergestellt sein können.

Gemäß Fig. 1 werden die Silikonschläuche 3 im Bereich einer VUV-Strahlungsquelle 4 derart angeordnet, dass ein Strahlungsbereich der Strahlungsquelle 4 auf Stirnflächen 5a, 5b der Silikonschläuche 3a, 3b ausgerichtet ist. Die Stirnflächen 5a, 5b bilden Verbindungsbereiche 6a, 6b, im Bereich welcher die Silikonschläuche 3a, 3b fluiddicht und dauerhaft miteinander zu einem Silikonschlauchstrang verbunden werden sollen.

In einem anschließenden, in **Fig. 2** dargestellten Verfahrensschritt wird die Strahlungsquelle 4 aktiviert. Dies hat zur Folge, dass die Verbindungsbereiche 6a, 6b mit VUV-Strahlen 7 beaufschlagt werden. Für das dargestellte Ausführungsbeispiel werden die beiden Stirnflächen 5a, 5b gleichzeitig von einer gemeinsamen Strahlungsquelle 4 mit dem VUV-Strahlen 7 beaufschlagt. Ebenfalls möglich ist, dass eine Strahlungsquelle 4 die Verbindungsbereiche 6a, 6b nacheinander mit VUV-Strahlen 7 beaufschlagt oder zwei Strahlungsquellen 4a, 4b vorhanden sind, die jeweils einen zugeordneten Verbindungsbereich 6a, 6b mit VUV-Strahlen 7 beaufschlagen.

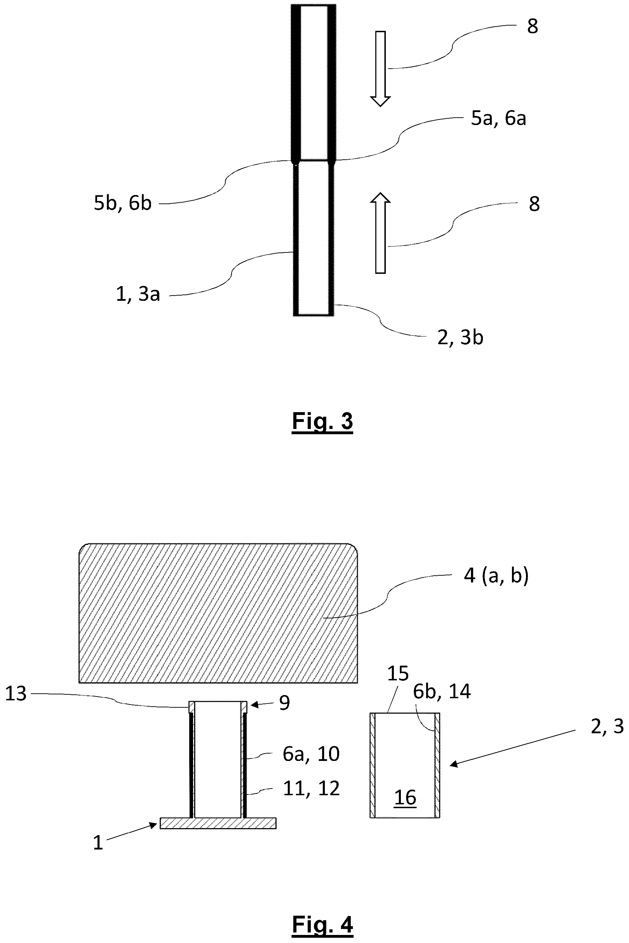

Ist eine derartige Behandlung der Verbindungsbereiche 6a, 6b mit VUV-Strahlen 7 für eine vorbestimmte Zeitdauer erfolgt, werden die Verbindungsbereiche 6a, 6b bei koaxialer Ausrichtung der Silikonschläuche 3a, 3b mit einer Anpresskraft 8 aneinander angepresst, so dass sich eine bündige Innen- und Außenfläche ergibt **(****Fig. 3****).** Die Anpresskraft 8 wird für eine vorbestimmte Zeitdauer aufrechterhalten, bis eine mechanisch beste und fluiddichte Verbindung zwischen den Silikonschläuchen 3a, 3b herbeigeführt ist.

Für das in **Fig. 4 bis 6** dargestellte Verfahren verfügt der erste Gegenstand 1, bei dem es sich beispielsweise um ein Gehäuse- oder Deckelteil handeln kann, über einen Anschlussstutzen 9. Der Anschlussstutzen 9 verfügt über eine Mantelfläche 10 aus Silikon. Hierbei kann die Mantelfläche 10 von einer einen Grundkörper des Anschlussstutzens 9 umgebenden Schicht 11 aus Silikon oder einer auf den Grundkörper des Anschlussstutzens 9 aufgebrachten Hülse 12 aus Silikon bestehen. Vorzugsweise verfügt der Anschlussstutzen über einen der Mantelfläche 10 aus Silikon in Richtung des freien Endes des Anschlussstutzens 9 vorgelagerten Absatz 13, der die Schicht 11 oder Hülse 12 sichert. In diesem Fall ist der zweite Gegenstand 2 als Silikonschlauch 3 ausgebildet.

Die beiden Gegenstände 1, 2 werden zunächst gemäß **Fig. 4** im Strahlungsbereich einer Strahlungsquelle 4 angeordnet.

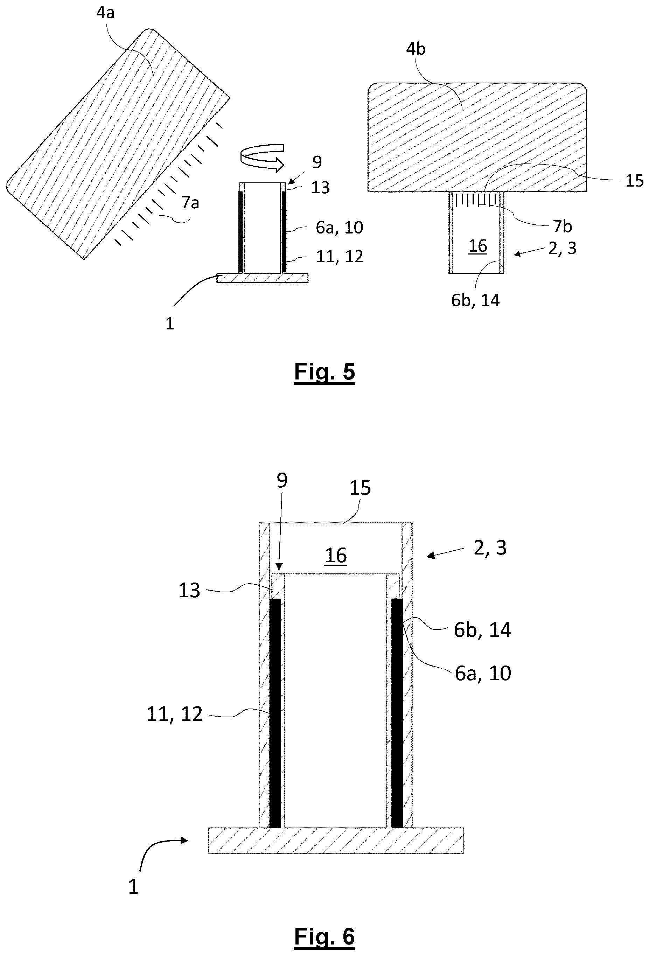

Gemäß **Fig. 5** erfolgt dann eine Beaufschlagung sowohl der Mantelfläche 10 des Anschlussstutzens 9 als auch einer Innenfläche 14 des Silikonschlauchs 3 mit VUV-Strahlen 7. In Fig. 5 wird eine besondere Ausführungsform für die Beaufschlagung mit den VUV-Strahlen 7 dargestellt, obwohl auch anderweitige Ausgestaltungen möglich sind. Hier ist eine Strahlungsquelle 4a seitlich neben dem Anschlussstutzen 9 angeordnet. Der erste Gegenstand 1 wird dann in Rotation um die Längsachse des Anschlussstutzens 9 versetzt, womit die VUV-Strahlen 7 der Strahlungsquelle 4a die gesamte Mantelfläche 10 beaufschlagen können. Für die Beaufschlagung der Innenfläche 14 des Silikonschlauchs 3 ist eine weitere Strahlungsquelle 4b eingesetzt. Diese entsendet dabei VUV-Strahlen 7 über eine Öffnung 15 des Silikonschlauchs 3 in einen Innenraum 16 des Silikonschlauchs 3 und beaufschlagt dann die Innenfläche 14 des Silikonschlauchs 3. Abweichend zu dem dargestellten Ausführungsbeispiel ist sogar möglich, dass die VUV-Strahlungsquelle 4b mit einer die VUV-Strahlen 7 aussendenden Lanze über die Öffnung 15 in den Innenraum 16 des Silikonschlauchs 3 hineinragt.

Wurden die Mantelfläche 10 des Anschlussstutzens 9 und die Innenfläche 14 des Silikonschlauchs 3 für vorbestimmte Zeitdauern mit VUV-Strahlen 7 beaufschlagt, wird gemäß Fig. 6 der Silikonschlauch 3 über den Anschlussstutzen 9 gestülpt. Die Mantelfläche 10 des Anschlussstutzens 9 und die Innenfläche 14 des Silikonschlauchs 3 bilden damit eine Kontaktfläche aus, so dass diese die Verbindungsbereiche 6a, 6b bilden. Vorzugsweise verfügt der Außendurchmesser der Mantelfläche 10 über einen größeren Durchmesser als die Innenfläche 14 des Silikonschlauchs 3, womit eine Anpresskraft in den Verbindungsbereichen 6a, 6b infolge der erforderlichen elastischen radialen Verformung gewährleistet ist.

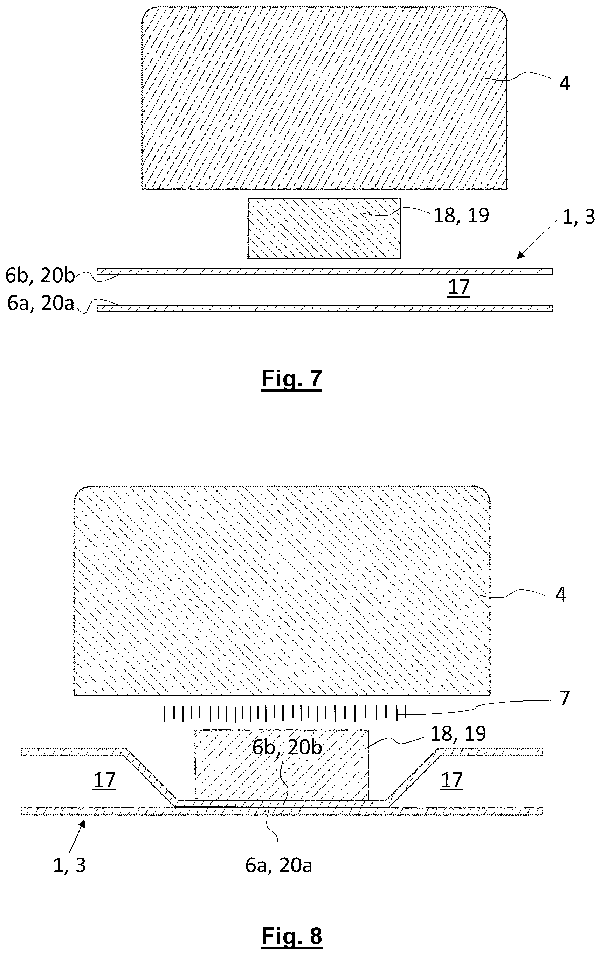

Für das in **Fig. 8 bis 10** dargestellte Verfahren ist ein Gegenstand 1 als Silikonschlauch 3 ausgebildet. Der Silikonschlauch 3 ist vorzugsweise mit einem Fluid 17 gefüllt. Gemäß Fig. 7 ist zwischen dem Silikonschlauch 3 und der Strahlungsquelle 4 ein Krafteinleitungskörper 18 angeordnet. Der Krafteinleitungskörper 18 verfügt zumindest über einen Materialbereich 19 aus einem Material, welches für VUV-Strahlen 7 durchlässig ist.

Gemäß **Fig. 8** wird (beispielsweise mittels eines Aktuators, manuell oder infolge des Eigengewichts) der Krafteinleitungskörper 18 an die Mantelfläche des Silikonschlauchs 3 angepresst. Infolge einer Anpresskraft des Krafteinleitungskörpers 18 an die Mantelfläche des Silikonschlauchs 3 erfolgt eine elastische und/oder plastische Verformung des Silikonschlauchs 3 derart, dass sich in Umfangsrichtung des Querschnitts des Silikonschlauchs 3 gegenüberliegende Innenflächenbereiche 20a, 20b aneinander annähern und aneinander angepresst werden, womit der Querschnitt des Silikonschlauchs 3 geschlossen ist. Während des Zusammendrückens des Silikonschlauches 3 durch den Krafteinleitungskörper 18 wird das Fluid aus dem Zwischenraum zwischen den Innenflächenbereichen 20a, 20b seitlich herausgepresst. In dem zusammengedrückten Zustand erfolgt gemäß Fig. 8 die Beaufschlagung mit den VUV-Strahlen 7. Hierbei gelangen die VUV-Strahlen 7 von der Strahlungsquelle 4 durch den Krafteinleitungskörper 18 und durch den Silikonschlauch 3 zu den von den Innenflächenbereichen 20a, 20b gebildeten Verbindungsbereichen 6a, 6b. Die Verbindungsbereiche 6a, 6b werden auch hier für eine vorbestimmte Zeitdauer mit den VUV-Strahlen 7 beaufschlagt. Möglich ist, dass nach der vorbestimmten Beaufschlagungsdauer mit den VUV-Strahlen 7 für eine weitere vorbestimmte Zeitspanne die Anpressung des Krafteinleitungskörpers 18 an den Silikonschlauch 3 gemäß Fig. 8 weiter aufrechterhalten wird.

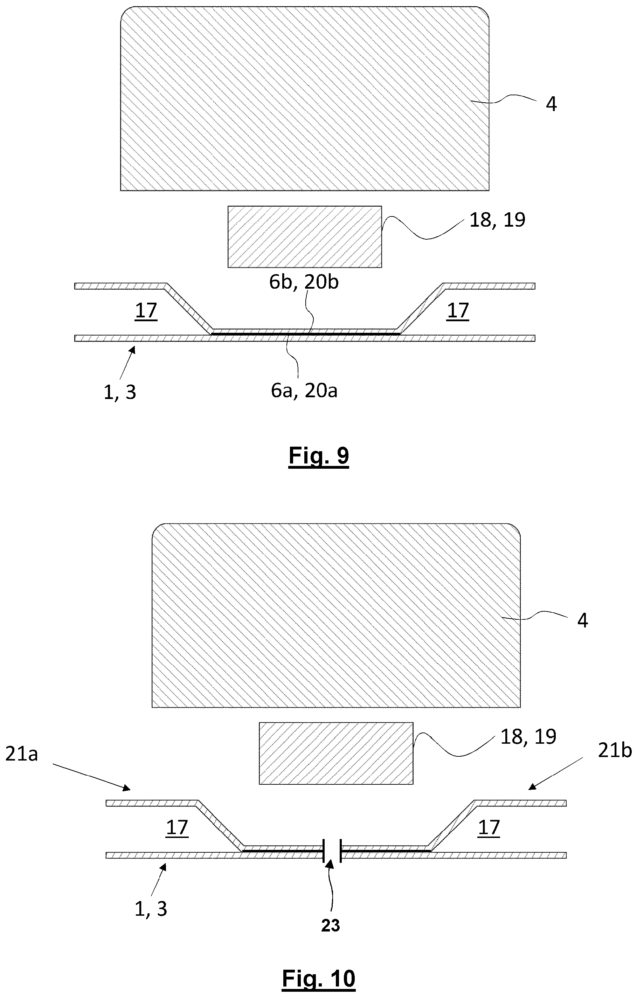

Hieran anschließend wird gemäß **Fig. 9** der Krafteinleitungskörper 18 von dem Silikonschlauch 3 entfernt. Es ist eine dauerhafte mechanische und fluiddichte Verbindung zwischen den Verbindungsbereichen 6a, 6b geschaffen.

Gemäß **Fig. 10** kann dann in den Verbindungsbereichen 6a, 6b eine Durchtrennung des Silikonschlauchs 3 erfolgen, womit zwei Silikonschlauchstücke 21a, 21b entstehen, die in den dargestellten Endbereichen fluiddicht geschlossen sind. Das Durchtrennen kann bspw. mittels eines Trennmessers oder mittels eines Lasers erfolgen. Möglich ist auch, dass der Krafteinleitungskörper 18 eine Rippe oder Schneide aufweist, die beim Anpressen an den Silikonschlauch 3 eine Schwächung oder Durchtrennung herbeiführt.

Sofern in der vorliegenden Beschreibung von einem Silikonschlauch 3 die Rede ist, kann es sich auch um ein eigensteifes, aber elastisch oder plastisch verformbares Silikonrohr handeln.

Möglich ist, dass die Beaufschlagung der Verbindungsbereiche 6a, 6b mit VUV-Strahlen 7 in einer Kammer 22 erfolgt, wie dies beispielhaft in Fig. 1 gestrichelt und schematisiert dargestellt ist. Die Kammer 22 kann dann mit einem inerten Fluid, insbesondere mit Stickstoff, gefüllt sein, oder in der Kammer 22 kann ein technisches Vakuum hergestellt sein.

Wie beschrieben wurde, kann der Krafteinleitungskörper 18 vollständig oder lediglich in einem Materialbereich 19 aus einem Material bestehen, welches durchlässig für die VUV-Strahlen 7 ist. Möglich ist aber auch, dass der Krafteinleitungskörper Durchgangsausnehmungen aufweist, im Bereich derer die VUV-Strahlen 7 durch den Krafteinleitungskörper 18 hindurch zu den Verbindungsbereichen 6 gelangen, während der Krafteinleitungskörper 18 auch benachbart diesen Durchgangsausnehmungen Materialbereiche aufweisen kann, im Bereich welcher Material vorhanden ist, welches nicht durchlässig für VUV-Strahlen 7 ist. Beispielsweise kann der Krafteinleitungskörper 18 gitterartig ausgebildet sein oder mit vielfältigen Bohrungen oder Ausnehmungen ausgestattet sein.

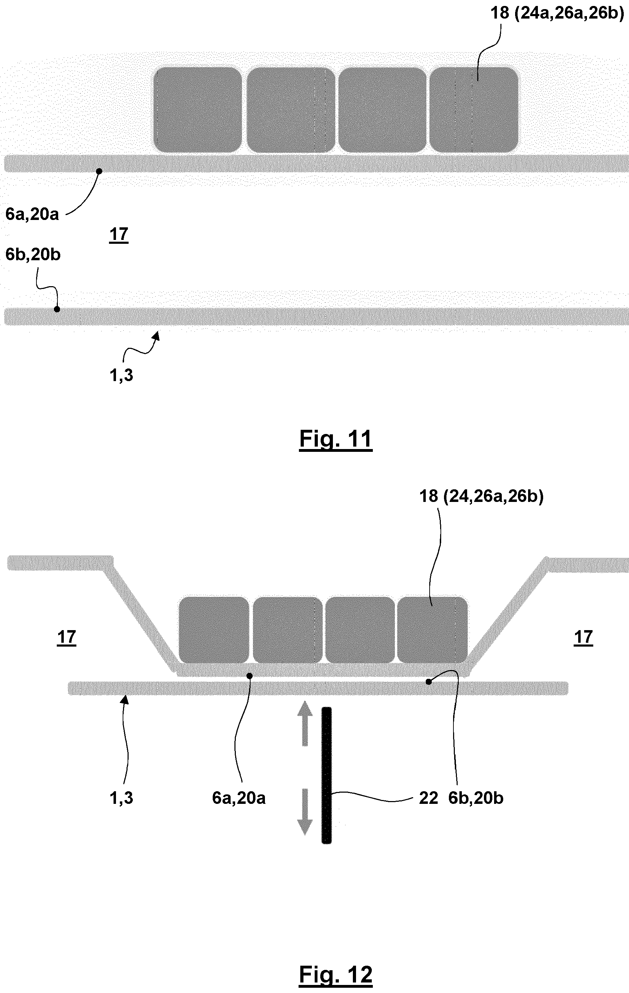

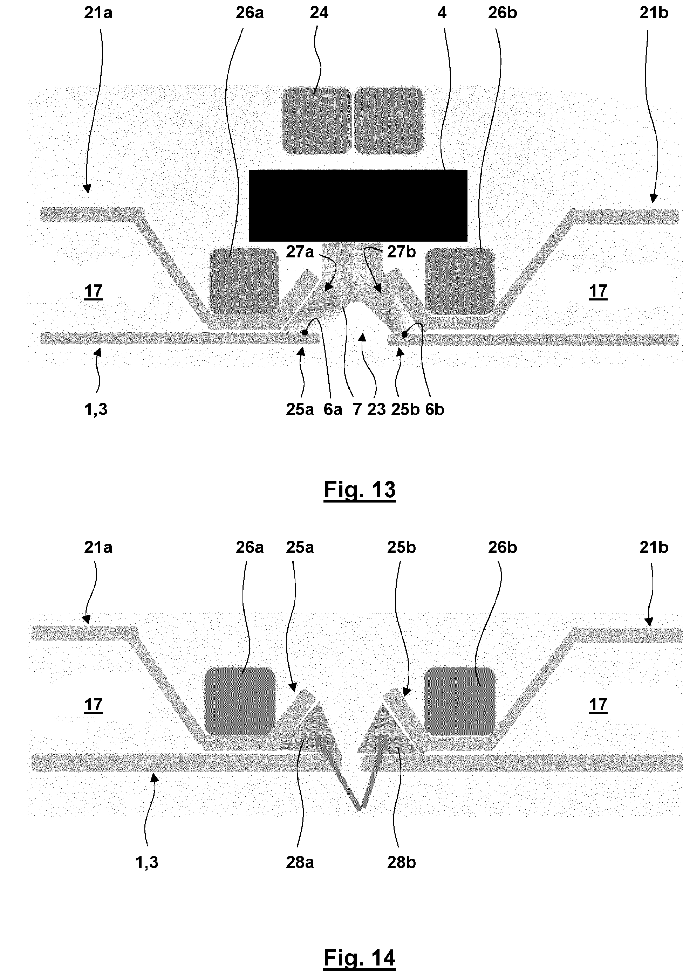

In **Fig. 11 bis 15** ist ein alternatives Verfahren dargestellt, mit welchem ein Silikonschlauch 3 in zwei Silikonschlauchstücke 21a, 21b getrennt werden kann, die jeweils im Bereich ihrer Trennstelle 23 fluiddicht verschlossen sind. Auch hier erfolgt zunächst gemäß **Fig. 11** eine Verformung des Silikonschlauchs 3 mittels eines Krafteinleitungskörpers 18 derart, dass die Innenflächenbereiche 20a, 20b, die die Verbindungsbereiche 6a, 6b bilden, aneinander zur Anlage kommen (oder zumindest einen verringerten Abstand voneinander haben **(****Fig. 12****).** Für dieses Ausführungsbeispiel ist der Krafteinleitungskörper 18 mehrteilig ausgebildet. Mittels eines Trennwerkzeugs 22 erfolgt dann die Durchtrennung des Silikonschlauches 3 in die Silikonschlauchstücke 21a, 21b mit der Erzeugung einer Trennstelle 23 (vgl. **Fig. 13****).** Ein mittiges Krafteinleitungskörperteil 24 wird dann von der Trennstelle 23 und den Endbereichen 25a, 25b der Silikonschlauchstücke 21a, 21b weg bewegt, während ein daran anschließender Abschnitt der Silikonschlauchstücke 21a, 21b jeweils weiterhin von einem Krafteinleitungskörperteil 26a, 26b heruntergedrückt und fixiert wird. In den Endbereichen 25a, 25b können sich die Innenflächenbereiche 20a, 20b (insbesondere infolge einer elastischen Rückstellung oder infolge der Eigenspannungen wegen der vorangegangenen Verformung) auseinanderspreizen oder auseinanderbewegen, womit insbesondere entsprechend Fig. 13 ein in Richtung der Trennstelle 23 geöffneter Zwischenraum 27a, 27b gebildet wird, der beispielsweise keilförmig in Richtung der Trennstelle 23 geöffnet sein kann. Mittels einer Strahlungsquelle 4 werden dann die Innenflächenbereiche 20a, 20b in den Endbereichen 25a, 25b mit VUV-Strahlen 7 beaufschlagt, wobei diese VUV-Strahlen 7 durch die Endbereiche der Silikonschlauchstücke 21a, 21b oder (wie in Fig. 13 dargestellt) durch die Öffnung der Zwischenräume 27a, 27b zu den Innenflächenbereichen 20a, 20b gelangen können.

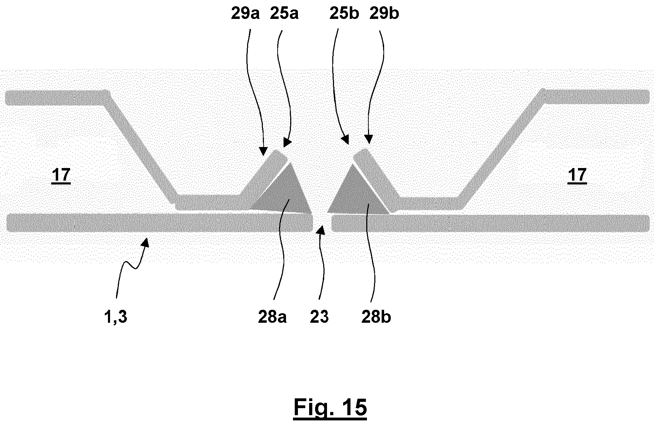

Möglich ist, dass daran anschließend wieder das Krafteinleitungskörperteil 24 herabbewegt wird, womit dann auch die Endbereiche 25a, 25b wieder aneinander angepresst werden zwecks Herstellung der Verbindung. **Fig. 14** zeigt aber eine andere Ausgestaltung des Verfahrens, bei welcher in die Zwischenräume 27a, 27b ein Klebstoff, Verbindungsmittel oder Verbindungskörper 28a, 28b eingebracht wird, der oder das dann die Verbindung mit dem zugeordneten Endbereich 25a, 25b der Silikonschlauchstücke 21a, 21b eingeht (vgl. **Fig. 15****).** Die Endbereiche 25 mit dem Klebstoff, Verbindungsmittel oder Verbindungskörper 28 können dann jeweils einen Wulst 29a, 29b bilden.

### BEZUGSZEICHENLISTE

- 1: erster Gegenstand
- 2: zweiter Gegenstand
- 3: Silikonschlauch
- 4: Strahlungsquelle
- 5: Stirnfläche
- 6: Verbindungsbereich
- 7: VUV-Strahlen
- 8: Anpresskraft
- 9: Anschlussstutzen
- 10: Mantelfläche
- 11: Schicht
- 12: Hülse
- 13: Absatz
- 14: Innenfläche
- 15: Öffnung
- 16: Innenraum
- 17: Fluid
- 18: Krafteinleitungskörper
- 19: Materialbereich
- 20: Innenflächenbereich
- 21: Silikonschlauchstück
- 22: Trennwerkzeug
- 23: Trennstelle
- 24: Krafteinleitungskörperteil
- 25: Endbereich
- 26: Krafteinleitungskörperteil
- 27: Zwischenraum
- 28: Klebstoff, Verbindungsmittel oder Verbindungskörper,
- 29: Wulst

## Patentansprüche

1. Verfahren zum Verbinden eines ersten Verbindungsbereichs (6a) mit einem zweiten Verbindungsbereich (6b), wobei der erste Verbindungsbereich (6a) und der zweite Verbindungsbereich (6b) aus Silikon bestehen, wobei
a) der erste und/oder der zweite Verbindungsbereich (6) mit VUV-Strahlen (7) beaufschlagt werden/wird,
b) die Verbindungsbereiche (6) aneinander angepresst werden oder mittels eines Klebstoffes, Verbindungsmittels oder Verbindungskörpers (28) miteinander verbunden werden und
c) vor und/oder während und/oder nach der Beaufschlagung mindestens eines Verbindungsbereichs (6) mit VUV-Strahlen (7) und/oder dem Anpressen der Verbindungsbereiche (6) aneinander eine elastische und/oder plastische Verformung mindestens eines Gegenstands (1, 2) in dem Verbindungsbereich (6) erfolgt,
**dadurch gekennzeichnet, dass**
d) während der Beaufschlagung mindestens eines Verbindungsbereichs (6) mit VUV-Strahlen (7) eine elastische und/oder plastische Verformung mindestens eines Gegenstands (1, 2) in dem Verbindungsbereich (6) erfolgt, die mittels eines Krafteinleitungskörpers (18) herbeigeführt wird, wobei der Krafteinleitungskörper (18) einen für die VUV-Strahlen (7) zumindest teildurchlässigen Materialbereich (19) aufweist und der mit den VUV-Strahlen (7) zu beaufschlagende mindestens eine Verbindungsbereich (6) von einer VUV-Strahlungsquelle (4) durch den Materialbereich (19) des Krafteinleitungskörpers (18) mit den VUV-Strahlen (7) beaufschlagt wird.

2. Verfahren nach Anspruch 1, **wobei** die Verbindungsbereiche (6) aneinander angepresst werden
a) nachdem der erste und/oder der zweite Verbindungsbereich (6) mit VUV-Strahlen (7) beaufschlagt worden sind/ist oder
b) während der der erste und/oder der zweite Verbindungsbereich (6) mit VUV-Strahlen (7) beaufschlagt werden/wird.

3. Verfahren nach einem der vorhergehenden Ansprüche, **wobei** die Beaufschlagung des ersten und/oder zweiten Verbindungsbereichs (6) frei von Sauerstoff erfolgt, wobei vorzugsweise die Beaufschlagung des ersten und/oder zweiten Verbindungsbereichs (6) in einer mit einem inerten Fluid, insbesondere Stickstoff, gefüllten Kammer (22) erfolgt.

4. Verfahren nach einem der vorhergehenden Ansprüche, **wobei** mindestens ein einen Verbindungsbereich (6) ausbildender Gegenstand (1, 2) als Hohlkörper mit einem Innenraum (16) ausgebildet ist und eine Beaufschlagung des Verbindungsbereichs (6) dieses Gegenstands (1, 2) mit den VUV-Strahlen durch den Innenraum (16) erfolgt.

5. Verfahren nach einem der Ansprüche 1 bis 4, **wobei** der erste Verbindungsbereich (6a) und der zweite Verbindungsbereich (6b) gegenüberliegende Innenflächenbereiche (20a, 20b) eines Silikonschlauches (3) sind und während der Beaufschlagung mindestens eines der Verbindungsbereiche (6) mit VUV-Strahlen (7) eine elastische und/oder plastische Verformung des Silikonschlauches (3) mittels eines Krafteinleitungskörpers (18) derart erfolgt, dass die Innenflächenbereiche (20a, 20b) aneinander zur Anlage kommen, wobei der Krafteinleitungskörper (18) einen für die VUV-Strahlen (7) zumindest teildurchlässigen Materialbereich (19) aufweist und die mit den VUV-Strahlen (7) zu beaufschlagenden Verbindungsbereiche (6) von einer VUV-Strahlungsquelle (4) durch den Materialbereich (19) des Krafteinleitungskörpers (18) mit den VUV-Strahlen (7) beaufschlagt werden.

6. Verfahren nach Anspruch 5, **wobei** anschließend eine Durchtrennung des Silikonschlauches (3) im Bereich der Verbindungsbereiche (6) erfolgt.

7. Verfahren zum Verbinden eines ersten Verbindungsbereichs (6a) mit einem zweiten Verbindungsbereich (6b), wobei der erste Verbindungsbereich (6a) und der zweite Verbindungsbereich (6b) aus Silikon bestehen, wobei
a) der erste und/oder der zweite Verbindungsbereich (6) mit VUV-Strahlen (7) beaufschlagt werden/wird und
b) die Verbindungsbereiche (6) aneinander angepresst werden oder mittels eines Klebstoffes, Verbindungsmittels oder Verbindungskörpers (28) miteinander verbunden werden,
**dadurch gekennzeichnet, dass**
c) der erste Verbindungsbereich (6a) und der zweite Verbindungsbereich (6b) gegenüberliegende Innenflächenbereiche (20a, 20b) eines Silikonschlauches (3) sind und in einen Zwischenraum (27) zwischen den gegenüberliegende Innenflächenbereichen (20) des Silikonschlauches (3) ein Klebstoff, Verbindungsmittel oder Verbindungskörper (28) eingebracht wird.

8. Verfahren nach Anspruch 7, **wobei**
a) eine elastische und/oder plastische Verformung des Silikonschlauches (3) mittels eines Krafteinleitungskörpers (18) derart erfolgt, dass die Innenflächenbereiche (20a, 20b) aneinander zur Anlage kommen,
b) mittels eines Trennwerkzeugs (22) eine Trennstelle (23) erzeugt wird, die Silikonschlauchstückteile (21) voneinander trennt,
c) ein Krafteinleitungskörperteil (24) von Endbereichen (25) der Silikonschlauchstückteile (21) weg bewegt wird,
d) die Innenflächenbereiche (20a, 20b) im Bereich von an die Trennstelle angrenzenden Zwischenräumen (27) mittels einer Strahlungsquelle (4) mit VUV-Strahlen (7) beaufschlagt werden und
e) ein Klebstoff, ein Verbindungsmittel oder ein Verbindungskörper (28) in die Zwischenräume (27) eingebracht wird, der dann eine Verbindung mit den Innenflächenbereichen (20) eingeht.

9. Verfahren nach einem der Ansprüche 6 bis 8, wobei das Verfahren zur Versiegelung eines mit einem Fluid (17) gefüllten Produktes verwendet wird.

10. Verfahren zum Verbinden eines ersten Verbindungsbereichs (6a) mit einem zweiten Verbindungsbereich (6b), wobei der erste Verbindungsbereich (6a) und der zweite Verbindungsbereich (6b) aus Silikon bestehen, wobei
a) der erste und/oder der zweite Verbindungsbereich (6) mit VUV-Strahlen (7) beaufschlagt werden/wird und
b) die Verbindungsbereiche (6) aneinander angepresst werden oder mittels eines Klebstoffes, Verbindungsmittels oder Verbindungskörpers (28) miteinander verbunden werden,
**dadurch gekennzeichnet, dass**
c) ein den ersten Verbindungsbereich (6a) ausbildender erster Gegenstand (1) ein erster Silikonschlauch (3a) ist und ein den zweiten Verbindungsbereich (6b) ausbildender zweiter Gegenstand (2) ein zweiter Silikonschlauch (3b) ist und die Verbindungsbereiche (6a, 6b) Stirnflächen (5a, 5b) der Silikonschläuche (3) sind.

11. Verfahren zum Verbinden eines ersten Verbindungsbereichs (6a) mit einem zweiten Verbindungsbereich (6b), wobei der erste Verbindungsbereich (6a) und der zweite Verbindungsbereich (6b) aus Silikon bestehen, wobei
a) der erste und/oder der zweite Verbindungsbereich (6) mit VUV-Strahlen (7) beaufschlagt werden/wird und
b) die Verbindungsbereiche (6) aneinander angepresst werden oder mittels eines Klebstoffes, Verbindungsmittels oder Verbindungskörpers (28) miteinander verbunden werden,
**dadurch gekennzeichnet, dass**
c) ein den ersten Verbindungsbereich (6a) ausbildender erster Gegenstand (1) ein Silikonschlauch (3) ist, wobei der erste Verbindungsbereich (6a) eine endseitige Innenfläche (14) des Silikonschlauches (3) ist, ein den zweiten Verbindungsbereich (6b) ausbildender zweiter Gegenstand (2) einen fluidischen Anschlussstutzen (9) aufweist, der eine Mantelfläche (10) aus Silikon aufweist, wobei die Mantelfläche (10) den zweiten Verbindungsbereich (6b) bildet, und nach dem Beaufschlagen des ersten und/oder zweiten Verbindungsbereichs (6) mit VUV-Strahlen (7) der Silikonschlauch (3) über den Anschlussstutzen (9) gestülpt wird, womit die Verbindungsbereiche (6a, 6b) miteinander in Kontakt kommen.

12. Verfahren nach Anspruch 11, **wobei** der Anschlussstutzen (9) ein Übermaß gegenüber dem Silikonschlauch (3) hat.

13. Verfahren nach Anspruch 11 oder 12, **wobei** die Beaufschlagung der Innenfläche (14) des Silikonschlauches (3) mit VUV-Strahlen (7) durch einen Innenraum (16) des Silikonschlauches (3) erfolgt.

14. Verfahren nach einem der Ansprüche 7 bis 13, **wobei**
a) die Verbindungsbereiche (6) aneinander angepresst werden, nachdem der erste und/oder der zweite Verbindungsbereich (6) mit VUV-Strahlen (7) beaufschlagt worden sind/ist oder während der der erste und/oder der zweite Verbindungsbereich (6) mit VUV-Strahlen (7) beaufschlagt werden/wird, und/oder
b) die Beaufschlagung des ersten und/oder zweiten Verbindungsbereichs (6) frei von Sauerstoff erfolgt, wobei vorzugsweise die Beaufschlagung des ersten und/oder zweiten Verbindungsbereichs (6) in einer mit einem inerten Fluid, insbesondere Stickstoff, gefüllten Kammer (22) erfolgt, und/oder
c) vor und/oder während und/oder nach der Beaufschlagung mindestens eines Verbindungsbereichs (6) mit VUV-Strahlen (7) und/oder dem Anpressen der Verbindungsbereiche (6) aneinander eine elastische und/oder plastische Verformung mindestens eines Gegenstands (1, 2) in dem Verbindungsbereich (6) erfolgt, und/oder
d) mindestens ein einen Verbindungsbereich (6) ausbildender Gegenstand (1, 2) als Hohlkörper mit einem Innenraum (16) ausgebildet ist und eine Beaufschlagung des Verbindungsbereichs (6) dieses Gegenstands (1, 2) mit den VUV-Strahlen durch den Innenraum (16) erfolgt.

## Claims

1. Method for connecting a first connection region (6a) to a second connection region (6b), wherein the first connection region (6a) and the second connection region (6b) consist of silicone, wherein
a) the first and/or the second connection region (6) is/are exposed to VUV radiation (7),
b) the connection regions (6) are pressed against one another or are connected to one another by means of an adhesive, connecting means or connecting body (28) and
c) before and/or during and/or after the exposure of at least one connection region (6) to VUV radiation (7) and/or the pressing of the connection regions (6) against one another, an elastic and/or plastic deformation of at least one object (1, 2) takes place in the connection region (6),
**characterized in that**
d) during the exposure of at least one connection region (6) to VUV radiation (7), an elastic and/or plastic deformation of at least one object (1, 2) takes place in the connection region (6), which deformation is brought about by means of a force introduction body (18), wherein the force introduction body (18) has a material region (19) that is at least partially transmissive to the VUV radiation (7), and the at least one connection region (6) to be exposed to the VUV radiation (7) is exposed to the VUV radiation (7) from a VUV radiation source (4) through the material region (19) of the force introduction body (18).

2. Method according to claim 1, wherein the connection regions (6) are pressed against one another
a) after the first and/or the second connection region (6) has/have been exposed to VUV radiation (7) or
b) while the first and/or the second connection region (6) is/are being exposed to VUV radiation (7).

3. Method according to one of the preceding claims, wherein the exposure of the first and/or second connection region (6) takes place in the absence of oxygen, wherein preferably the exposure of the first and/or second connection region (6) takes place in a chamber (22) filled with an inert fluid, in particular nitrogen.

4. Method according to one of the preceding claims, wherein at least one object (1, 2) forming a connection region (6) is configured as a hollow body with an interior space (16), and an exposure of the connection region (6) of this object (1, 2) to the VUV radiation takes place through the interior space (16).

5. Method according to one of claims 1 to 4, wherein the first connection region (6a) and the second connection region (6b) are opposing inner surface regions (20a, 20b) of a silicone tube (3), and during the exposure of at least one of the connection regions (6) to VUV radiation (7), an elastic and/or plastic deformation of the silicone tube (3) takes place by means of a force introduction body (18) in such a way that the inner surface regions (20a, 20b) come into contact with one another, wherein the force introduction body (18) has a material region (19) that is at least partially transmissive to the VUV radiation (7), and the connection regions (6) to be exposed to the VUV radiation (7) are exposed to the VUV radiation (7) from a VUV radiation source (4) through the material region (19) of the force introduction body (18).

6. Method according to claim 5, wherein the silicone tube (3) is subsequently severed in the region of the connection regions (6).

7. Method for connecting a first connection region (6a) to a second connection region (6b), wherein the first connection region (6a) and the second connection region (6b) consist of silicone, wherein
a) the first and/or the second connection region (6) is/are exposed to VUV radiation (7) and
b) the connection regions (6) are pressed against one another or are connected to one another by means of an adhesive, connecting means or connecting body (28),
**characterized in that**
c) the first connection region (6a) and the second connection region (6b) are opposing inner surface regions (20a, 20b) of a silicone tube (3), and an adhesive, connecting means or connecting body (28) is introduced into an intermediate space (27) between the opposing inner surface regions (20) of the silicone tube (3).

8. Method according to claim 7, wherein
a) an elastic and/or plastic deformation of the silicone tube (3) takes place by means of a force introduction body (18) in such a way that the inner surface regions (20a, 20b) come into contact with one another,
b) by means of a separating tool (22), a separation area (23) is produced which separates silicone tube section parts (21) from one another,
c) a force introduction body part (24) is moved away from end regions (25) of the silicone tube section parts (21),
d) the inner surface regions (20a, 20b) in the region of intermediate spaces (27) adjoining the separation area are exposed to VUV radiation (7) by means of a radiation source (4) and
e) an adhesive, a connecting means or a connecting body (28) is introduced into the intermediate spaces (27), which then forms a connection with the inner surface regions (20).

9. Method according to one of claims 6 to 8, wherein the method is used for sealing a product filled with a fluid (17).

10. Method for connecting a first connection region (6a) to a second connection region (6b), wherein the first connection region (6a) and the second connection region (6b) consist of silicone, wherein
a) the first and/or the second connection region (6) is/are exposed to VUV radiation (7) and
b) the connection regions (6) are pressed against one another or are connected to one another by means of an adhesive, connecting means or connecting body (28),
**characterized in that**
c) a first object (1) forming the first connection region (6a) is a first silicone tube (3a), and a second object (2) forming the second connection region (6b) is a second silicone tube (3b), and the connection regions (6a, 6b) are end faces (5a, 5b) of the silicone tubes (3).

11. Method for connecting a first connection region (6a) to a second connection region (6b), wherein the first connection region (6a) and the second connection region (6b) consist of silicone, wherein
a) the first and/or the second connection region (6) is/are exposed to VUV radiation (7) and
b) the connection regions (6) are pressed against one another or are connected to one another by means of an adhesive, connecting means or connecting body (28),
**characterized in that**
c) a first object (1) forming the first connection region (6a) is a silicone tube (3), wherein the first connection region (6a) is an inner surface (14) at an end of the silicone tube (3), a second object (2) forming the second connection region (6b) has a fluidic connection stub (9) which has a lateral surface (10) made of silicone, wherein the lateral surface (10) forms the second connection region (6b), and after exposing the first and/or second connection region (6) to VUV radiation (7), the silicone tube (3) is pulled over the connection stub (9), whereby the connection regions (6a, 6b) come into contact with one another.

12. Method according to claim 11, wherein the connection stub (9) has an oversize relative to the silicone tube (3).

13. Method according to claim 11 or 12, wherein the exposure of the inner surface (14) of the silicone tube (3) to VUV radiation (7) takes place through an interior space (16) of the silicone tube (3).

14. Method according to one of claims 7 to 13, wherein
a) the connection regions (6) are pressed against one another after the first and/or the second connection region (6) has/have been exposed to VUV radiation (7) or while the first and/or the second connection region (6) is/are being exposed to VUV radiation (7), and/or
b) the exposure of the first and/or second connection region (6) takes place in the absence of oxygen, wherein preferably the exposure of the first and/or second connection region (6) takes place in a chamber (22) filled with an inert fluid, in particular nitrogen, and/or
c) before and/or during and/or after the exposure of at least one connection region (6) to VUV radiation (7) and/or the pressing of the connection regions (6) against one another, an elastic and/or plastic deformation of at least one object (1, 2) takes place in the connection region (6), and/or
d) at least one object (1, 2) forming a connection region (6) is configured as a hollow body with an interior space (16), and an exposure of the connection region (6) of this object (1, 2) to the VUV radiation takes place through the interior space (16).

## Revendications

1. Procédé pour connecter une première zone de connexion (6a) à une deuxième zone de connexion (6b), la première zone de connexion (6a) et la deuxième zone de connexion (6b) étant constituées de silicone, dans lequel
a) la première et/ou la deuxième zone de connexion (6) sont exposées à un rayonnement VUV (7),
b) les zones de connexion (6) sont pressées l'une contre l'autre ou sont connectées l'une à l'autre au moyen d'un adhésif, d'un agent de liaison ou d'un corps de liaison (28), et
c) avant et/ou pendant et/ou après l'exposition d'au moins une zone de connexion (6) à un rayonnement VUV (7) et/ou le pressage des zones de connexion (6) l'une contre l'autre, une déformation élastique et/ou plastique d'au moins un objet (1, 2) dans la zone de connexion (6) a lieu,
**caractérisé en ce que**
d) pendant l'exposition d'au moins une zone de connexion (6) à un rayonnement VUV (7), une déformation élastique et/ou plastique d'au moins un objet (1, 2) dans la zone de connexion (6) a lieu, laquelle est provoquée au moyen d'un corps d'introduction de force (18), le corps d'introduction de force (18) présentant une zone de matériau (19) au moins partiellement perméable au rayonnement VUV (7), et la zone de connexion (6) devant être exposée au rayonnement VUV (7) étant exposée à un rayonnement VUV (7) par une source de rayonnement VUV (4) à travers la zone de matériau (19) du corps d'introduction de force (18).

2. Procédé selon la revendication 1, dans lequel les zones de connexion (6) sont pressées l'une contre l'autre
a) après que la première et/ou la deuxième zone de connexion (6) ont été exposées à un rayonnement VUV (7), ou
b) pendant que la première et/ou la deuxième zone de connexion (6) sont exposées à un rayonnement VUV (7).

3. Procédé selon l'une des revendications précédentes, dans lequel l'exposition de la première et/ou de la deuxième zone de connexion (6) a lieu sans oxygène, de préférence l'exposition de la première et/ou de la deuxième zone de connexion (6) ayant lieu dans une chambre (22) remplie d'un fluide inerte, en particulier d'azote.

4. Procédé selon l'une des revendications précédentes, dans lequel au moins un objet (1, 2) formant une zone de connexion (6) est réalisé comme un corps creux avec un espace intérieur (16), et une exposition de la zone de connexion (6) de cet objet (1, 2) au rayonnement VUV a lieu à travers l'espace intérieur (16).

5. Procédé selon l'une des revendications 1 à 4, dans lequel la première zone de connexion (6a) et la deuxième zone de connexion (6b) sont des zones de surface intérieure opposées (20a, 20b) d'un tube en silicone (3), et pendant l'exposition d'au moins une des zones de connexion (6) à un rayonnement VUV (7), une déformation élastique et/ou plastique du tube en silicone (3) au moyen d'un corps d'introduction de force (18) a lieu de telle sorte que les zones de surface intérieure (20a, 20b) viennent en contact l'une avec l'autre, le corps d'introduction de force (18) présentant une zone de matériau (19) au moins partiellement perméable au rayonnement VUV (7), et les zones de connexion (6) devant être exposées au rayonnement VUV (7) étant exposées à un rayonnement VUV (7) par une source de rayonnement VUV (4) à travers la zone de matériau (19) du corps d'introduction de force (18).

6. Procédé selon la revendication 5, dans lequel ensuite un sectionnement du tube en silicone (3) dans la zone des zones de connexion (6) a lieu.

7. Procédé pour connecter une première zone de connexion (6a) à une deuxième zone de connexion (6b), la première zone de connexion (6a) et la deuxième zone de connexion (6b) étant constituées de silicone, dans lequel
a) la première et/ou la deuxième zone de connexion (6) sont exposées à un rayonnement VUV (7), et
b) les zones de connexion (6) sont pressées l'une contre l'autre ou sont connectées l'une à l'autre au moyen d'un adhésif, d'un agent de liaison ou d'un corps de liaison (28),
**caractérisé en ce que**
c) la première zone de connexion (6a) et la deuxième zone de connexion (6b) sont des zones de surface intérieure opposées (20a, 20b) d'un tube en silicone (3), et un adhésif, un agent de liaison ou un corps de liaison (28) est introduit dans un espace intermédiaire (27) entre les zones de surface intérieure opposées (20) du tube en silicone (3).

8. Procédé selon la revendication 7, dans lequel
a) une déformation élastique et/ou plastique du tube en silicone (3) au moyen d'un corps d'introduction de force (18) a lieu de telle sorte que les zones de surface intérieure (20a, 20b) viennent en contact l'une avec l'autre,
b) une zone de séparation (23) est créée au moyen d'un outil de séparation (22), séparant les segments de tube en silicone (21) les uns des autres,
c) une partie de corps d'introduction de force (24) est déplacée à partir des extrémités (25) des segments de tube en silicone (21),
d) les zones de surface intérieure (20a, 20b) dans la zone des espaces intermédiaires (27) adjacents à la zone de séparation sont exposées au rayonnement VUV (7) au moyen d'une source de rayonnement (4), et
e) un adhésif, un agent de liaison ou un corps de liaison (28) est introduit dans les espaces intermédiaires (27), lequel établit alors une connexion avec les zones de surface intérieure (20).

9. Procédé selon l'une des revendications 6 à 8, dans lequel le procédé est utilisé pour le scellement d'un produit rempli d'un fluide (17).

10. Procédé pour connecter une première zone de connexion (6a) à une deuxième zone de connexion (6b), la première zone de connexion (6a) et la deuxième zone de connexion (6b) étant constituées de silicone, dans lequel
a) la première et/ou la deuxième zone de connexion (6) sont exposées à un rayonnement VUV (7), et
b) les zones de connexion (6) sont pressées l'une contre l'autre ou sont connectées l'une à l'autre au moyen d'un adhésif, d'un agent de liaison ou d'un corps de liaison (28),
**caractérisé en ce que**
c) un premier objet (1) formant la première zone de connexion (6a) est un premier tube en silicone (3a), et un deuxième objet (2) formant la deuxième zone de connexion (6b) est un deuxième tube en silicone (3b), et les zones de connexion (6a, 6b) sont des surfaces d'extrémité (5a, 5b) des tubes en silicone (3).

11. Procédé pour connecter une première zone de connexion (6a) à une deuxième zone de connexion (6b), la première zone de connexion (6a) et la deuxième zone de connexion (6b) étant constituées de silicone, dans lequel
a) la première et/ou la deuxième zone de connexion (6) sont exposées à un rayonnement VUV (7), et
b) les zones de connexion (6) sont pressées l'une contre l'autre ou sont connectées l'une à l'autre au moyen d'un adhésif, d'un agent de liaison ou d'un corps de liaison (28),
**caractérisé en ce que**
c) un premier objet (1) formant la première zone de connexion (6a) est un tube en silicone (3), la première zone de connexion (6a) étant une surface intérieure d'extrémité (14) du tube en silicone (3), un deuxième objet (2) formant la deuxième zone de connexion (6b) présente un embout de raccordement fluidique (9) qui présente une surface de gaine (10) en silicone, la surface de gaine (10) formant la deuxième zone de connexion (6b), et après l'exposition de la première et/ou de la deuxième zone de connexion (6) à un rayonnement VUV (7), le tube en silicone (3) est enfilé sur l'embout de raccordement (9), de sorte que les zones de connexion (6a, 6b) entrent en contact l'une avec l'autre.

12. Procédé selon la revendication 11, dans lequel l'embout de raccordement (9) présente un surdimensionnement par rapport au tube en silicone (3).

13. Procédé selon la revendication 11 ou 12, dans lequel l'exposition de la surface intérieure (14) du tube en silicone (3) à un rayonnement VUV (7) a lieu à travers un espace intérieur (16) du tube en silicone (3).

14. Procédé selon l'une des revendications 7 à 13, dans lequel
a) les zones de connexion (6) sont pressées l'une contre l'autre, après que la première et/ou la deuxième zone de connexion (6) ont été exposées à un rayonnement VUV (7), ou pendant que la première et/ou la deuxième zone de connexion (6) sont exposées à un rayonnement VUV (7), et/ou
b) l'exposition de la première et/ou de la deuxième zone de connexion (6) a lieu sans oxygène, de préférence l'exposition de la première et/ou de la deuxième zone de connexion (6) ayant lieu dans une chambre (22) remplie d'un fluide inerte, en particulier d'azote, et/ou
c) avant et/ou pendant et/ou après l'exposition d'au moins une zone de connexion (6) à un rayonnement VUV (7) et/ou le pressage des zones de connexion (6) l'une contre l'autre, une déformation élastique et/ou plastique d'au moins un objet (1, 2) dans la zone de connexion (6) a lieu, et/ou
d) au moins un objet (1, 2) formant une zone de connexion (6) est réalisé comme un corps creux avec un espace intérieur (16), et une exposition de la zone de connexion (6) de cet objet (1, 2) au rayonnement VUV a lieu à travers l'espace intérieur (16).
